# EUROPEAN PATENT APPLICATION

(11) **EP 4 659 985 A1**
(43) Date of publication of application: **10.12.2025**
(21) Application number: 24180132.3
(22) Date of filing: 05.06.2024
(51) Int. Cl.: B60L 1/00, B60L 3/00, B60L 58/20, B60R 16/03, H02J 7/00

(54) **SWITCH FOR DECOMMISSIONING AN ONBOARD BATTERY OF AN ELECTRICAL VEHICLE, AND VEHICLE COMPRISING SUCH SWITCH**

(71) Applicant: Volvo Truck Corporation, 405 08 Göteborg (SE)
(72) Inventor: PATEL, Nimish, GREENSBORO, 27455 (US); DAS, Abhijit, HIGH POINT, 27265 (US)
(74) Representative: Lavoix

(57) **Abstract**

Switch (100) for decommissioning an onboard battery of an electrical vehicle, comprising:
- at least one main contact (1, 2) positioned along a conductor (11, 21) adapted to supply a low-voltage load (21, 22), the main contact being switchable between a closed position where power along the conductor is allowed and an open position where power is interrupted;
- a further main contact (3) switchable between a normally closed position and an open position where the battery is connected to ground;
- an auxiliary contact (4) switchable between an ON position where current along a high-voltage interlock loop (5) of the vehicle is enabled and an OFF position where current along the high-voltage interlock loop is interrupted causing the traction or high voltage of the vehicle to be cut-off;
- a main lever (104) for switching the auxiliary contact from the ON to the OFF position causing interruption of the high-voltage interlock loop;
- a monitoring circuit (7) causing all main contacts to switch from their closed position to their open position after the auxiliary contact has been switched OFF.

## Description

### TECHNICAL FIELD

The disclosure relates generally to electrical vehicles. In particular aspects, the disclosure relates to a switch for decommissioning an onboard battery suitable to supply power to an electrical vehicle. The disclosure can be applied to heavy-duty vehicles, such as trucks, buses, and construction equipment, among other vehicle types. Although the disclosure may be described with respect to a particular vehicle, the disclosure is not restricted to any particular electrically powered vehicle, and can be used be with fully electrical vehicles or hybrid vehicles, i.e. vehicles supplied also with power provided by a feeding system other than one or more onboard batteries.

### BACKGROUND

Currently, procedures and methods for decommissioning onboard batteries used for powering vehicles, such as High-Duty HD vehicles, are time consuming, complicated and somewhat confusing, requesting some manual operations and the use of various devices, such as a multimeter and a locking switch.

### SUMMARY

According to a first aspect of the disclosure, there is provided a switch for decommissioning an onboard battery suitable to supply power to an electrical vehicle, comprising:
- at least one main contact suitable to be positioned along a conductor adapted to supply at least one low-voltage load of the vehicle;
- a further main contact suitable to be positioned along a grounding cable adapted to connect the battery to ground;
   wherein the at least one main contact can be switched between a closed position where flow of power along the conductor is allowed and an open position where flow of power is interrupted, and the further main contact can be switched between a normally closed position and an open position where the battery is connected to ground;
- an auxiliary contact which is configured to be switched between an position where flow of current along an associated high-voltage interlock loop of the vehicle is enabled and an position flow of current along said high-voltage interlock loop of the vehicle is interrupted, the high-voltage interlock loop causing, when interrupted, the traction or high voltage of the vehicle's system to be cut-off;
- a main lever which can be actuated to switch the auxiliary contact from the ON position to the OFF position thereby causing the high-voltage interlock loop to get interrupted;
- a monitoring circuit which detects when the auxiliary contact has been switched and causes the at least one and further main contacts to switch from the respective closed position to the respective open position after the auxiliary contact has been switched OFF. The first aspect of the disclosure may seek to simplify the procedure for decommissioning an onboard battery of a vehicle. A technical benefit may include reducing significantly the required maintenance time linked to the decommissioning process of the onboard battery.

Optionally in some examples, including in at least one preferred example, the monitoring circuit is configured to cause the at least one and further main contacts to switch from the respective closed position to the respective open position with a predetermined delay after the auxiliary contact has been switched OFF. A technical benefit may include providing a safety margin for operators while resulting anyhow in a quick decommissioning procedure.

Optionally in some examples, including in at least one preferred example, the at least one main contact of the switch comprises:
- a first main contact suitable to be positioned along a first conductor adapted to supply at least one load of the vehicle at a first low voltage;
- a second main contact suitable to be positioned along a second conductor adapted to supply at least one further load of the vehicle at a second low voltage higher than the first low voltage;
wherein the first main contact and the second main contact can be switched between a closed position where flow of power along the respective first and second conductors is allowed and an open position where flow of power is interrupted. A technical benefit may include using a switch that reduces significantly the required maintenance time linked to the decommissioning process of the onboard battery, while allowing, when installed in operations to power loads of the vehicle at different voltage levels.

Optionally in some examples, including in at least one preferred example, the monitoring circuit further comprises or is operatively associated to an indicator which is configured to indicate, in particular visually, when the high-voltage interlock loop has been interrupted. A technical benefit may include providing a safer decommissioning procedure for operators who can visually and directly identify if the high voltage system of the vehicle is definitely interrupted.

Optionally in some examples, including in at least one preferred example, the indicator comprises a LED configured to be turned OFF when the high-voltage interlock loop has been interrupted and before the main contacts are switched from their respective closed position to their respective open position. A technical benefit may include providing a safety indication for operators according to a very simple and effective solution.

Optionally in some examples, including in at least one preferred example, the monitoring circuit switches the first, second, and third main contacts from the respective closed position to the respective open position with a predetermined delay after the auxiliary contact has been switched OFF. A technical benefit may include providing a safety margin for operators while resulting anyhow in a quick decommissioning procedure.

Optionally in some examples, including in at least one preferred example, the switch is a three-pole switch. A technical benefit may include providing a simple and effective switch to be easily installed on board a vehicle.

According to a second aspect of the disclosure, there is provided a vehicle comprising at least one onboard battery for powering the vehicle, wherein it comprises at least one switch for decommissioning the at least one onboard battery as above defined and in particular as claimed in the appended claims. A technical benefit may include reducing significantly the required maintenance time linked to the decommissioning process of the onboard battery of the vehicle, allowing at the same time to extend the battery life since drivers can complete shut down the vehicle safely with one switch, e.g. when the vehicle has to be parked for long time.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary view schematically illustrating a switch for decommissioning an onboard battery suitable to supply power to an electrical vehicle, according to an example.
FIG. 2 is an exemplary view schematically illustrating a circuital configuration of the switch of FIG. 1, according to an example.

### DETAILED DESCRIPTION

The detailed description set forth below provides information and examples of the disclosed technology with sufficient detail to enable those skilled in the art to practice the disclosure.

As previously indicated, current procedures and methods for decommissioning batteries installed onboard of electrical vehicles, are quite cumbersome, require manual interventions and the use of different tools/devices, thus resulting in rather lengthy battery maintenance or replacement operations. The switch according to the disclosure allows providing, with a single and simple device, a safe shut down of the vehicle HV and LV systems, eliminating or at least reducing parts of nowadays cumbersome and time-consuming methods currently used in electrical vehicles.

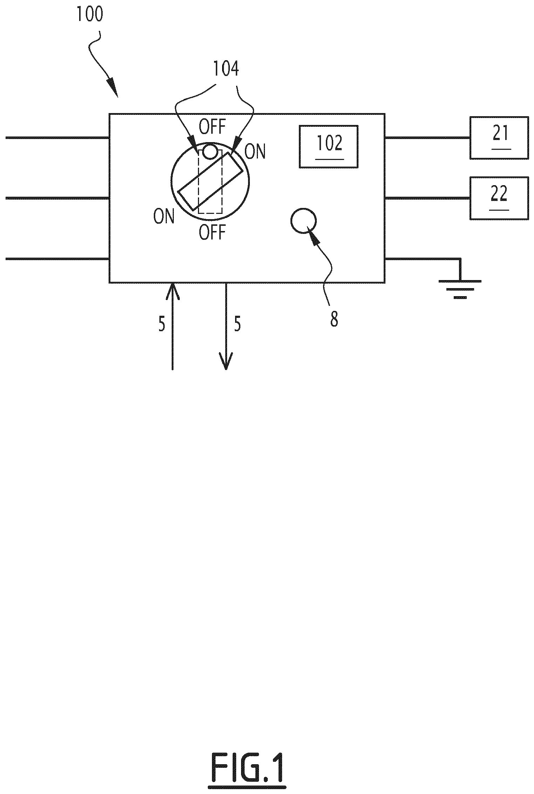

FIG. 1 schematically illustrates an example of a switch for decommissioning an onboard battery suitable to supply power to an electrical vehicle, indicated by the overall reference 100, and which comprises a housing schematically indicated by the reference number 102.

On the housing 102 there is conveniently provided a main or actuating lever 104 which can be actuated by a user for the scope that will be described in details herein after.

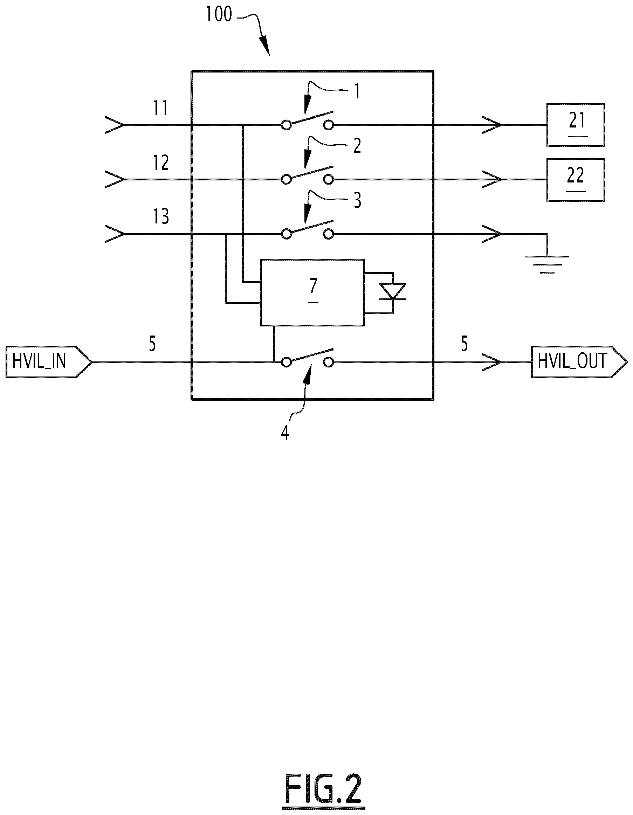

Fig. 2 illustrates an exemplary circuital configuration of the switch 100 once installed onboard of an electric vehicle, wherein the housing 102 and the main lever 104 have been removed for the sake of illustration.

In particular, the switch 100 comprises:
- at least one main contact 1, 2 suitable to be positioned along a conductor 21, 22 adapted to supply at least one low-voltage load of the vehicle;
- a further main contact 3 suitable to be positioned along a grounding cable 23 adapted to connect the battery to ground.

The at least one main contact 1, 2 can be switched between a closed position (or ON status) where flow of power along the conductor 21, 22 is allowed, and an open position (or OFF status) where flow of power is interrupted.

The further main contact 3 can be switched between a normally closed position (or ON status) and an open position (or OFF status) where the battery is connected to ground.

The switch 100 further comprises an auxiliary contact 4 which is configured to be switched between a closed or ON position where flow of current along an associated high-voltage interlock loop 5 of the vehicle is enabled, and an open or OFF position where flow of current along the high-voltage interlock loop 5 of the vehicle is interrupted.

The high-voltage interlock loop 5 is for example configured to allow passage along it of a low level current, e.g. 15 mA, and is caused by the auxiliary contacts of the main contactor. When interrupted, the traction or high voltage of the vehicle's system is cut-off, for example by the intervention or under the control of the electronic control unit (ECU) of the vehicle.

The main lever 104 can be actuated, for example by a user, to switch the auxiliary contact 4 from the ON position to the OFF position thereby causing the high-voltage interlock loop 5 to get interrupted.

In this way, the high voltage connections of the battery are cut-off first.

With the definitions of low voltage and high voltage it is hereby meant voltages up to 1kV and above 1 kV, respectively.

The switch 100 according to the disclosure comprises also a monitoring circuit 7 which is configured to detect when the auxiliary contact 4 has been switched OFF and to switch the at least one and further main contacts 1, 2, 3 from the respective closed position to the respective open position after the auxiliary contact 4 has been switched OFF.

In one possible example, the monitoring circuit 7 is configured to detect when the auxiliary contact 4 has been switched OFF and to switch the at least one and further main contacts 1, 2, 3 from the respective closed position to the respective open position with a predetermined delay after the auxiliary contact 4 has been switched OFF.

In one possible example, as illustrated in FIG. 2, the at least one main contact comprises:
- a first main contact suitable to be positioned along a first conductor 11 adapted to supply at least one load of the vehicle at a first low voltage; and
- a second main contact suitable to be positioned along a second conductor 12 adapted to supply at least one further load 22 of the vehicle at a second low voltage higher than the first low voltage.

In particular, the first main contact 1 and the second main contact 2 can be switched between a closed position where flow of power along the respective first and second conductors 11, 12 is allowed and an open position where flow of power is interrupted.

In one possible example, the first low voltage is about 12V and second voltage is about 24 V.

In one possible example, the monitoring circuit 7 further comprises or is operatively associated to an indicator, illustrated in FIG. 1 with the reference number 8, which is configured to visually indicate for an operator when the high-voltage interlock loop 5 has been interrupted.

In one possible example, the indicator 8 comprises a LED configured to be normally turned ON, i.e. illuminated, thus visually indicating that the high-voltage interlock loop 5 is not interrupted and therefore that the high voltage system of the vehicle may be still active, and to be turned OFF when the high-voltage interlock loop 5, thus visually indicating that the high-voltage interlock loop 5 has been interrupted.

In particular, the indicator 8 is turned off (switched off) substantially immediately after the high-voltage interlock loop 5 gets interrupted and before the main contacts 1, 2, 3 are switched from their respective closed position to their respective open position.

In one possible example, the monitoring circuit 7 is configured to switch the first, second, and third main contacts 1, 2, 3 from the respective closed position to the respective open position with a predetermined delay after the auxiliary contact 4 has been switched OFF comprised between X and Y.

The operational actions/functionalities described in any of the exemplary aspects herein are described to provide examples and discussion. The actions/functionalities may be performed by hardware components, may be embodied in machine-executable instructions to cause a processor to perform the actions, or may be performed by a combination of hardware and software. Although a specific order of actions/functionalities may have been shown or described, the order of the actions may differ. In addition, two or more actions/functionalities may be performed concurrently or with partial concurrence.

The present disclosure provides the following examples.

Example 1: A switch 100 for decommissioning an onboard battery suitable to supply power to an electrical vehicle, comprising:
- at least one main contact 1, 2 suitable to be positioned along a conductor 11, 21 adapted to supply at least one low-voltage load 21, 22 of the vehicle;
- a further main contact 3 suitable to be positioned along a grounding cable 13 adapted to connect the battery to ground;
   wherein the at least one main contact 1, 2 is switchable between a closed position where flow of power along the conductor 11, 12 is allowed and an open position where flow of power is interrupted, and the further main contact 3 is switchable between a normally closed position and an open position where the battery is connected to ground;
- an auxiliary contact 4 which is configured to be switched between an ON position where flow of current along an associated high-voltage interlock loop 5 of the vehicle is enabled and an OFF position flow of current along said high-voltage interlock loop 5 of the vehicle is interrupted, the high-voltage interlock loop 5 causing, when interrupted, the traction or high voltage of the vehicle's system to be cut-off;
- a main lever 104 which can be actuated to switch the auxiliary contact 4 from the ON position to the OFF position thereby causing the high-voltage interlock loop 5 to get interrupted;
- a monitoring circuit 7 which detects when the auxiliary contact 4 has been switched OFF and causes the at least one and further main contacts 1, 2, 3 to switch from the respective closed position to the respective open position with a predetermined delay after the auxiliary contact 4 has been switched OFF.

Example 2: The switch 100 of example 1, wherein the monitoring circuit 7 causes the at least one and further main contacts 1, 2, 3 to switch from the respective closed position to the respective open position with a predetermined delay after the auxiliary contact 4 has been switched OFF.

Example 3: The switch 100 of example 1 or 2, wherein the at least one main contact comprises:
- a first main contact 1 suitable to be positioned along a first conductor 11 adapted to supply at least one load 21 of the vehicle at a first low voltage;
- a second main contact 2 suitable to be positioned along a second conductor 12 adapted to supply at least one further load 22 of the vehicle at a second low voltage higher than the first low voltage;
wherein the first main contact 1 and the second main contact 2 can be switched between a closed position where flow of power along the respective first and second conductors 11, 12 is allowed and an open position where flow of power is interrupted.

Example 4: The switch 100 of any of the previous examples, wherein the monitoring circuit 7 further comprises or is operatively associated to an indicator 8 which indicates when the high-voltage interlock loop 5 has been interrupted.

Example 5: The switch 100 of example 4, wherein said indicator 8 comprises a LED configured to be turned off when the high-voltage interlock loop 5 has been interrupted and before the main contacts 1, 2, 3 are switched from their respective closed position to their respective open position.

Example 6: The switch 100 according to one or more of the previous examples, wherein said monitoring circuit 7 switches the first, second, and third main contacts 1, 2, 3 from the respective closed position to the respective open position with a predetermined delay after the auxiliary contact 4 has been turned off.

Example 7: The switch 100 according to one or more of the previous examples, wherein the switch is a three-pole switch.

Example 8: A vehicle comprising at least one onboard battery for powering the vehicle, wherein it comprises at least one switch 100 for decommissioning the at least one onboard battery according to one or more of the previous examples.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

For example, when the term "adapted" or "arranged" or "configured" or any similar/equivalent term is used herein while referring to any component as a whole, or to any part of a component, or to a combination of components, it has to be understood that it may mean and encompass correspondingly either the structure, and/or configuration and/or form and/or positioning of the related component or part thereof, or combinations, such term refers to.

In particular, for electronic and/or software means, each of the above listed terms may means and encompass electronic circuitry or parts thereof, as well as stored, embedded or running software codes and/or routines, algorithms, or complete programs, suitably designed for achieving the technical result and/or the functional performances for which such means are devised for.

In addition, when the term "about" or "substantial" or "substantially" is used herein, it has to be understood as encompassing an actual variation of plus or minus 5% with respect to an indicated reference value, axis, time or position.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims. It should also be noted that in order to clearly and concisely describe the present disclosure, the drawings may not necessarily be to scale and certain features of the disclosure may be shown in somewhat schematic form.

## Claims

1. A switch (100) for decommissioning an onboard battery suitable to supply power to an electrical vehicle, comprising:
- at least one main contact (1, 2) suitable to be positioned along a conductor (11, 21) adapted to supply at least one low-voltage load (21, 22) of the vehicle;
- a further main contact (3) suitable to be positioned along a grounding cable (13) adapted to connect the battery to ground;
wherein the at least one main contact (1, 2) is switchable between a closed position where flow of power along the conductor (11, 12) is allowed and an open position where flow of power is interrupted, and the further main contact (3) is switchable between a normally closed position and an open position where the battery is connected to ground;
- an auxiliary contact (4) which is configured to be switched between an ON position where flow of current along an associated high-voltage interlock loop (5) of the vehicle is enabled and an OFF position flow of current along said high-voltage interlock loop (5) of the vehicle is interrupted, the high-voltage interlock loop (5) causing, when interrupted, the traction or high voltage of the vehicle's system to be cut-off;
- a main lever (104) which can be actuated to switch the auxiliary contact (4) from the ON position to the OFF position thereby causing the high-voltage interlock loop (5) to get interrupted;
- a monitoring circuit (7) which detects when the auxiliary contact (4) has been switched OFF and causes the at least one and further main contacts (1, 2, 3) to switch from the respective closed position to the respective open position after the auxiliary contact (4) has been switched OFF.

2. The switch (100) according to claim 1, wherein the monitoring circuit (7) causes the at least one and further main contacts (1, 2, 3) to switch from the respective closed position to the respective open position with a predetermined delay after the auxiliary contact (4) has been switched OFF.

3. The switch (100) according to claim 1 or 2, wherein the at least one main contact comprises:
- a first main contact (1) suitable to be positioned along a first conductor (11) adapted to supply at least one load (21) of the vehicle at a first low voltage;
- a second main contact (2) suitable to be positioned along a second conductor (12) adapted to supply at least one further load (22) of the vehicle at a second low voltage higher than the first low voltage;
wherein the first main contact (1) and the second main contact (2) can be switched between a closed position where flow of power along the respective first and second conductors (11, 12) is allowed and an open position where flow of power is interrupted.

4. The switch (100) according to one or more of the previous claims, wherein the monitoring circuit (7) further comprises or is operatively associated to an indicator (8) which indicates when the high-voltage interlock loop (5) has been interrupted.

5. The switch (100) according to claim 4, wherein said indicator (8) comprises a LED configured to be turned off when the high-voltage interlock loop (5) has been interrupted and before the main contacts (1, 2, 3) are switched from their respective closed position to their respective open position.

6. The switch (100) according to one or more of the previous claims, wherein said monitoring circuit (7) switches the first, second, and third main contacts (1, 2, 3) from the respective closed position to the respective open position with a predetermined delay after the auxiliary contact (4) has been turned off.

7. The switch (100) according to one or more of the previous claims, wherein the switch is a three-pole switch.

8. A vehicle comprising at least one onboard battery for powering the vehicle, wherein it comprises at least one switch (100) for decommissioning the at least one onboard battery according to one or more of the previous claims.

## Amended claims

### Amended claims in accordance with Rule 137(2) EPC.

1. A switch (100) for decommissioning an onboard battery suitable to supply power to an electrical vehicle, comprising:
- at least one main contact (1, 2) suitable to be positioned along a conductor (11, 12) adapted to supply at least one low-voltage load (21, 22) of the vehicle;
- a further main contact (3) suitable to be positioned along a grounding cable (13) adapted to connect the battery to ground;
wherein the at least one main contact (1, 2) is switchable between a closed position where flow of power along the conductor (11, 12) is allowed and an open position where flow of power is interrupted, and the further main contact (3) is switchable between a normally closed position and an open position where the battery is connected to ground;
- an auxiliary contact (4) which is configured to be switched between an ON position where flow of current along an associated high-voltage interlock loop (5) of the vehicle is enabled and an OFF position where flow of current along said high-voltage interlock loop (5) of the vehicle is interrupted, the high-voltage interlock loop (5) causing, when interrupted, the traction or high voltage of the vehicle's system to be cut-off;
- a main lever (104) which can be actuated to switch the auxiliary contact (4) from the ON position to the OFF position thereby causing the high-voltage interlock loop (5) to get interrupted;
- a monitoring circuit (7) which detects when the auxiliary contact (4) has been switched OFF and causes the at least one and further main contacts (1, 2, 3) to switch from the respective closed position to the respective open position after the auxiliary contact (4) has been switched OFF.

2. The switch (100) according to claim 1, wherein the monitoring circuit (7) causes the at least one and further main contacts (1, 2, 3) to switch from the respective closed position to the respective open position with a predetermined delay after the auxiliary contact (4) has been switched OFF.

3. The switch (100) according to claim 1 or 2, wherein the at least one main contact comprises:
- a first main contact (1) suitable to be positioned along a first conductor (11) adapted to supply at least one load (21) of the vehicle at a first low voltage;
- a second main contact (2) suitable to be positioned along a second conductor (12) adapted to supply at least one further load (22) of the vehicle at a second low voltage higher than the first low voltage;
wherein the first main contact (1) and the second main contact (2) can be switched between a closed position where flow of power along the respective first and second conductors (11, 12) is allowed and an open position where flow of power is interrupted.

4. The switch (100) according to one or more of the previous claims, wherein the monitoring circuit (7) further comprises or is operatively associated to an indicator (8) which indicates when the high-voltage interlock loop (5) has been interrupted.

5. The switch (100) according to claim 4, wherein said indicator (8) comprises a LED configured to be turned off when the high-voltage interlock loop (5) has been interrupted and before the main contacts (1, 2, 3) are switched from their respective closed position to their respective open position.

6. The switch (100) according to one or more of the previous claims, wherein said monitoring circuit (7) switches the first, second, and third main contacts (1, 2, 3) from the respective closed position to the respective open position with a predetermined delay after the auxiliary contact (4) has been turned off.

7. The switch (100) according to one or more of the previous claims, wherein the switch is a three-pole switch.

8. A vehicle comprising at least one onboard battery for powering the vehicle, wherein it comprises at least one switch (100) for decommissioning the at least one onboard battery according to one or more of the previous claims.
